Europäisches Patentamt

European Patent Office

Office européen des brevets

(19)

(11) Veröffentlichungsnummer : **0 387 702 B1**

(12) ## EUROPÄISCHE PATENTSCHRIFT

(45) Veröffentlichungstag der Patentschrift :
06.09.95 Patentblatt 95/36

(51) Int. Cl.$^6$ : **G05D 23/20, F24D 19/10**

(21) Anmeldenummer : **90104424.8**

(22) Anmeldetag : **08.03.90**

(54) **Verfahren zum Regeln der Vor- bzw. Rücklauftemperatur einer Warmwasser Heizungsanlage.**

(30) Priorität : **11.03.89 DE 3907955**

(43) Veröffentlichungstag der Anmeldung :
**19.09.90 Patentblatt 90/38**

(45) Bekanntmachung des Hinweises auf die
Patenterteilung :
**06.09.95 Patentblatt 95/36**

(84) Benannte Vertragsstaaten :
**DE FR GB IT NL**

(56) Entgegenhaltungen :
**DE-A- 2 419 374
DE-A- 3 614 607
REGELUNGS-TECHNISCHE PRAXIS, Bd. 23,
Nr. 2, Februar 1981, München, DE; Seiten
61-64, U. OSSENDOTH: 'Verringerung der bleibenden Regeldifferenz von PD-Zweipunktreglern'**

(56) Entgegenhaltungen :
**REGELUNGS-TECHNISCHE PRAXIS, Bd. 23,
Nr. 11, November 1981, München, DE; Seiten
398-401; U. OSSENDOTH et al.: 'Eine Einstellempfehlung für den PDPI-Zweipunktregler'**

(73) Patentinhaber : **ROBERT BOSCH GMBH
Postfach 30 02 20
D-70442 Stuttgart (DE)**

(72) Erfinder : **Bolz, Günther, Ing. (grad.)
Kurt-Schumacher-Strasse 59/3
D-7410 Reutlingen 1 (DE)**
Erfinder : **Schwarz, Hans-Jochen, Dipl.-Ing.
Haselbrunnenweg 10
D-7060 Schorndorf (DE)**
Erfinder : **Nothdurft, Gerhard, Dipl.-Ing.
Johannes-Kepler-Strasse 17
D-7312 Kirchheim 4 (DE)**
Erfinder : **König, Markus, Dipl.-Ing. (FH)
Albstrasse 7
D-7075 Mutlangen (DE)**

EP 0 387 702 B1

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

## Beschreibung

Die Erfindung geht aus von einem Verfahren zum Regeln der Vor- bzw. Rücklauftemperatur einer Warmwasser-Heizungsanlage nach der Gattung des Hauptanspruchs. Bei den bekannten Verfahren dieser Gattung erfolgt die Regelung entweder durch einen Stetigregler oder einen Zweipunktregler. Bei der Stetigregelung muß der Brenner unterhalb einer bestimmten, brennabhängigen Leistungsschwelle abgeschaltet werden, weil der Wirkungsgrad unwirtschaftlich wird oder die Schadstoffkonzentration im Abgas über zulässige Werte ansteigt.

Oberhalb dieser Leistungsschwelle kann die Regelung durch einen optimal angepaßten Stetigregler erfolgen, der die Solltemperatur sehr genau einregelt. Sinkt bei der herkömmlichen Technik der Leistungsbedarf unter die Abschaltschwelle, so beginnt der Brenner mit einer Frequenz zu takten, die nur durch die Zeitkonstante des Regelkreises begrenzt wird. Da die Hysterese in diesem Fall sehr klein ist, kann die Taktfrequenz Werte größer 200 Takte pro Stunde erreichen. Wirkungsgrad und Verbrennung sind dabei sehr ungünstig. Üblicherweise wird dies durch Einführung einer generellen Sperrzeit, die das Wiedereinschalten einer bestimmten Zeit verhindert, unterdrückt. Diese Sperrzeit führt durch die zwangsweise Abkühlung zu großen Temperaturschwankungen. Nach Ende der Sperrzeit ist die Regelabweichung groß, und der Stetigregler erhöht die Brennerleistung stark, was eine rasche Aufheizung über den Sollwert und eine erneute Abschaltung hervorruft. Die Taktperiodendauer ergibt sich somit aus Sperrzeit plus (sehr kurze) Aufheizzeit. Bei Anwendung eines Zweipunktreglers kann das Taktverhalten optimiert werden, da über die Hysterese die Schaltzeiten beeinflußbar sind. Diesem günstigen Taktverhalten steht jedoch eine grundsätzlich schlechtere Regelgüte gegenüber. Da ein derartiges Gerät definitionsgemäß nur eine konstante Brennerleistung abgeben kann, ist der Leistungsbereich des Brenners bedeutend kleiner als bei stetig geregelten Brennern.

Durch die "Informations-Schrift K7, Digital-Regelsystem" der Fa. Centra-Bürkle ist ein Regelsystem bekanntgeworden, das in einem unteren Leistungsbereich (Grundstufe genannt), lediglich eine Zweipunktsteuerung und in einem oberen Bereich (Proportional-Bereich genannt) eine Stetigregelung aufweist. Nachteilig an diesem Regelsystem ist, daß eine sogenannte Rückschaltwartezeit benötigt wird, die ein Abschalten durch den Stetigregler verhindert und erst nach Ablauf der Wartezeit in den Zweipunktbetrieb umschaltet. Dies bewirkt jedoch, daß der Regelkreis unterbrochen und eine Leistung gesteuert wird, die nicht nötig ist. Die Temperatur steigt weiter, obwohl der Regler eine Abschaltung verlangt. Nach Ablauf der Wartezeit folgen durch die Sperrzeiten hohe Temperaturschwankungen.

## Vorteile der Erfindung

Das erfindungsgemäße Verfahren mit den kennzeichnenden Merkmalen des Hauptanspruchs hat demgegenüber den Vorteil, daß einerseits eine möglichst geringe Schalthäufigkeit auftritt und andererseits sowohl bei kleinem als auch bei großem Wärmebedarf eine bestmögliche Regelgüte erreicht wird.

Es erfolgt eine Aufteilung des Brennerleistungsbereichs, indem bei einem Wärmebedarf über der Schaltwelle der Stetigregler, und bei einem Wärmebedarf unter der Schaltwelle der Zweipunktregler aktiviert wird. Dies bedeutet, daß die Regler jeweils aktiv sind, wenn ihre guten Eigenschaften benötigt werden: Optimales Regelverhalten bei höherem Wärmebedarf, günstiges Taktverhalten bei kleinem Wärmebedarf.

Die Umschaltung zwischen den beiden Regelungsarten erfolgt abhängig von der Heizleistung automatisch. Besonders vorteilhaft ist es, vom Stetigregler zum Zweipunktregler umzuschalten, wenn innerhalb einer vorgegebenen Zeit eine bestimmte Anzahl von Brennerabschaltungen durch den Stetigregler erfolgt, und wenn umgekehrt vom Zweipunktregler auf den Stetigregler umgeschaltet wird, wenn die Solltemperatur beziehungsweise die Abschalttemperatur nicht innerhalb vorgegebenen Zeiten erreicht wird.

Durch die in den Unteransprüchen aufgeführten Maßnahmen kann das Verfahren gemäß dem Hauptanspruch vorteilhaft weitergebildet werden.

In weiterer Ausgestaltung der Erfindung wird vorgeschlagen, daß die Schalthysterese des Zweipunktreglers ausgehend von einem Startwert nach jedem Schaltvorgang entsprechend der angestrebten maximalen Schalthäufigkeit optimiert wird. Dieses Verfahren benötigt keinen Außentemperaturfühler, sondern optimiert die Schalthysterese des Zweipunktreglers nach jedem Schaltvorgang.

Anhand der vergangenen Ein- und Auszeiten erfolgt eine Prüfung, ob die Periodendauer innerhalb eines gewünschten Bereichs liegt. Ist dies nicht der Fall, erfolgt ein stufenweises Senken oder Erhöhen der Hysterese. Die Hysterese kann dabei symmetrisch oder asymmetrisch zum Sollwert festgelegt werden. Die Bestimmung des Hysteresestartwertes erfolgt vorteilhaft durch Messung des Abkühlverhaltens, wobei die Abkühlzeit etwa der halben angestrebten Periodendauer entspricht. Bei kleinem Wärmebedarf und normalen Betriebsbedingungen ist somit sichergestellt, daß sich nach einigen Taktzyklen der bestmögliche Kompromiß zwischen Takthäufigkeit und Regelgüte einstellt. Sind die Betriebsbedingungen, durch minimalen Wärmeforderung und sehr kleine Umlaufwassermengen, extrem ungünstig, kann die Taktfrequenz weiter ansteigen, wenn die Hysterese ihren Maximalwert erreicht hat.

Zur Vermeidung der mit einer generellen Sperrzeit verbundenen Nachteile wird vorgeschlagen, daß die maximale Schalthäufigkeit durch eine Periodendauerbegrenzung bestimmt wird. Dieses Verfahren hat außerdem den Vorteil, daß nach einer Regelabschaltung im Stetigbetrieb, die durch eine Verringerung der Umlaufmenge hervorgerufen wurde (Schließen eines Heizkörpers), keine Sperrzeit aktiviert wird. Der Regler kann den Brenner bereits nach kurzer Zeit wieder einschalten, und die Temperaturschwankung bleibt gering.

Die nach einer Regelabschaltung vorgesehene Mindestabschaltzeit wird zweckmäßig aus der Differenz zwischen der kleinsten geforderten Periodendauer und der vor der Regelabschaltung erreichten Einschaltzeit bestimmt. Bei ungünstigen Bedingungen im Zweipunktbetrieb kann die Taktfrequenz nicht über den zulässigen Wert steigen, da der abgeschaltete Zustand solange beibehalten bleibt, bis als Summe aus vorangegangener Einschaltzeit und aufgelaufener Abschaltzeit die minimale Periodendauer erreicht ist.

Zeichnung

Ein Ausführungsbeispiel des erfindungsgemäßen Verfahrens ist anhand der folgenden Beschreibung und der Zeichnung näher erläutert. Die Figuren 1 und 2 zeigen Temperaturverlaufsdiagramme einer herkömmlichen Stetigregelung bei hohem und bei geringem Wärmebedarf. In den Figuren 3 und 4 sind die Temperaturverlaufsdiagramme des erfindungsgemäßen Regelverfahrens in einer Gasheiztherme bei hohem und geringem Wärmebedarf dargestellt.

Beschreibung des Ausführungsbeispieles

Für die Durchführung des Regelverfahrens sind folgende Daten festgelegt:

| Stetigregler: | PID-Regler |
|---|---|
| Schaltschwelle: | 40% Brennerleistung |

| Zweipunktregler: | |
|---|---|
| Brennerleistung: | 40% |
| maximale Einschalttemperatur: | Sollwert-3K |
| minimale Einschalttemperatur: | Sollwert-30K |
| Ausschalttemperatur: | Sollwert-3K |
| Hystereselage: | asymmetrisch |
| maximale Hysterese: | 33K |
| minimale Hysterese: | 6K |
| Hysteresestufung: | 2K |
| angestrebter Periodendauerbereich: | 10 Min bis 15 Min |
| Periodendauerbegrenzung: | 3 Min |
| Dauer der Abkühlphase: | 3,5 Min |

Schaltbedingungen:

vom Stetigregler zum Zweipunktregler: mehr als 1 Abschaltung innerhalb von 8 Min

vom Zweipunktregler zum Stetigregler: Solltemperatur-3K bei Aufheizung nicht innerhalb von
10 Min erreicht

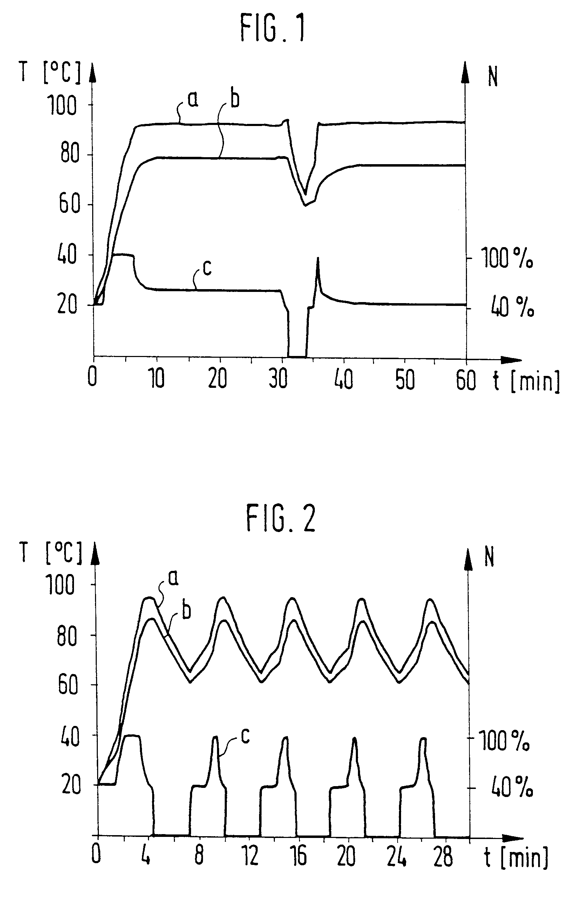

In den Diagrammen nach den Figuren 1 bis 4 sind jeweils die Verläufe a der Vorlauftemperatur, b der Rücklauftemperatur und c der der Wasserheizung zugeführten Heizenergie aufgetragen.

Erläuterungen zu den Diagrammen:

Figur 1: hoher Wärmebedarf, herkömmlicher Stetigregler mit Sperrzeit 3 Min.

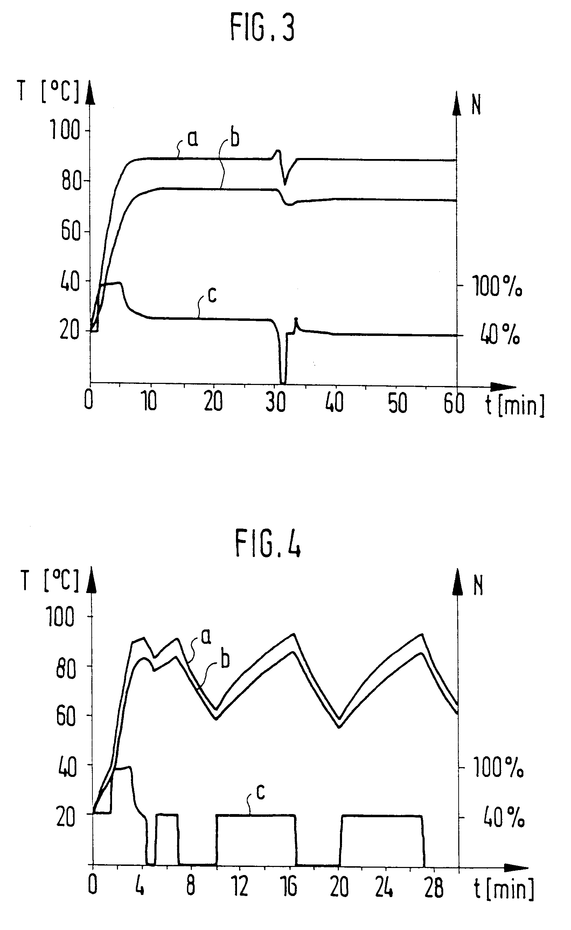

Figur 3: hoher Wärmebedarf, kombinierter Regler gemäß Erfindung mit Periodendauerbegrenzung 3 Min.

Zeitablauf für beide Diagramme:

| 0 Min | Einschaltzeitpunkt des Gerätes |
|---|---|
| 1,5 Min | Ende einer generallen Leistungsbegrenzung (nach jeder Brennereinschaltung) |
| 7 Min | Sollwert nahezu erreicht |
| 30 Min | Absenkung der Umlaufwassermenge (z.B. durch Abschalten von Heizkörpern) |
| Vergleich: | Bei Periodendauerbegrenzung nach Figur 3 ergibt sich eine deutlich kleinere Temperaturschwankung als bei der Sperrzeit nach Figur 1. |

Figur 2: Niedriger Wärmebedarf, herkömmlicher Stetigregler.
Figur 4: Niedriger Wärmebedarf, kombinierter Regler gemäß Erfindung.

Zeitablauf für beide Diagramme:

| 0 Min | Start des Gerätes und Aufheizvorgang |
|---|---|

4,5 Min        Solltemperatur überschritten, erste Reglerabschaltung.

Das herkömmliche Gerät nach Figur 2 taktet nun mit einer Periodendauer = Sperrzeit (3 Min) + Aufheizzeit (3 Min) = 6 Min.

Kombinierter Regler nch Figur 4, weiterer Zeitablauf:

5 Min        Brennereinschaltung als Stetigregler

7 Min        Zweite Abschaltung innerhalb von 8 Min und Übergang zum Zweipunktregler

10 Min        Ende der Abkühlphase und Bestimmung der Anfangshysterese

16,5 Min        Aufheizung bis zur Abschalttemperatur und Erhöhung der Hysterese, da vergangene Periodendauer kleiner als 10 Min

20 Min        Abkühlung bis zur Einschalttemperatur, Periodendauer 10 Min erreicht, Hysterese bleibt konstant.

Vergleich: Beim kombinierten Regler nach Figur 4 ist die Periodendauer mit 10 Minuten deutlich größer als beim herkömmlichen Regler mit 6 Min, ohne daß eine Verschlechterung der Regelgüte eintritt.

## Patentansprüche

1. Verfahren zum Regeln der Vor- beziehungsweise Rücklauftemperatur einer Warmwasser-Heizungsanlage, bei welchem die Heizenergiezufuhr zum Wassererhitzer entsprechend dem Wärmebedarf verändert wird, mit folgenden Merkmalen:
bei hohem Leistungsbedarf wird mittels eines Stetigreglers (P-, PI-, oder PID-Regler) und bei niedrigem Leistungsbedarf mittels eines Zweipunktreglers geregelt,
zwischen den beiden Regelungsarten wird abhängig von der Heizleistung automatisch umgeschaltet, vom Stetigregler zum Zweipunktregler wird umgeschaltet, wenn innerhalb einer vorgegebenen Zeit eine bestimmte Anzahl von Brennerabschaltungen überschritten wird.

2. Verfahren nach Anspruch 1, dadurch gekennzeichnet, daß vom Zweipunktregler zum Stetigregler umgeschaltet wird, wenn die Solltemperatur beziehungsweise die Abschalttemperatur nicht innerhalb vorgegebener Zeiten erreicht wird.

3. Verfahren nach einem der vorhergehenden Ansprüche, dadurch gekennzeichnet, daß bei der Zweipunktregelung die Heizleistung auf einen unterhalb der Maximalleistung liegenden Wert begrenzt wird.

4. Verfahren nach einem der vorhergehenden Ansprüche, dadurch gekennzeichnet, daß die Schalthysterese des Zweipunktreglers ausgehend von einem Startwert nach jedem Schaltvorgang entsprechend der angestrebten maximalen Schalthäufigkeit optimiert wird.

5. Verfahren nach einem der vorhergehenden Ansprüche, dadurch gekennzeichnet, daß der Startwert der Schalthysterese des Zweipunktreglers nach einem Übergang vom Stetigregler zum Zweipunktregler als die Differenz zwischen Sollwert und Istwert, die sich nach einer festgelegten Abkühlzeit einstellt, bestimmt wird.

6. Verfahren nach einem der vorhergehenden Ansprüche, dadurch gekennzeichnet, daß die maximale Schalthäufigkeit durch eine Periodendauerbegrenzung bestimmt wird.

7. Verfahren nach Anspruch 6, dadurch gekennzeichnet, daß sich nach einer Regelabschaltung die Mindestabschaltzeit aus der Differenz zwischen der kleinsten geforderten Periodendauer und der vor der Regelabschaltung erreichten Einschaltzeit bestimmt.

## Claims

1. Method for controlling the feed temperature and return temperature of a water heating system, in which the supply of heating energy to the water heater is varied in accordance with the heat requirements, having the following features:
in the case of a high power requirement control is by means of a continuous-action controller (P-, PI-, or PID-controller) and in the case of a low power requirement control is by means of a two-position controller, switching over between the two types of control is performed as a function of the heating capacity, and a switchover is made from the continuous-action controller to the two-position controller when a specific number of burner shutdowns is exceeded within a prescribed time.

2. Method according to Claim 1, characterized in that a switchover is made from the two-position controller to the continuous-action controller when the desired temperature or the shutdown temperature is not reached within prescribed times.

3. Method according to one of the preceding claims, characterized in that in the case of the two-position control the heating capacity is limited to a value below the maximum capacity.

4. Method according to one of the preceding claims, characterized in that the switching hysteresis of the two-position controller is optimized proceeding from a starting value after each switching operation in accordance with the targeted maximum switching rate.

5. Method according to one of the preceding claims, characterized in that the starting value of the switching hysteresis of the two-position controller is determined after a transition from the continuous-action controller to the two-position controller as the difference between the desired value and actual value, which difference is set after a fixed cool-down time.

6. Method according to one of the preceding claims, characterized in that the maximum switching rate is determined by a period limitation.

7. Method according to Claim 6, characterized in that after a normal shutdown the minimum shutdown time is determined from the difference between the smallest required period and the on-time reached before the normal shutdown.

**Revendications**

1. Procédé de régulation de la température d'alimentation/de retour d'une installation de chauffage à eau chaude selon lequel on modifie l'alimentation en énergie du moyen de chauffage de l'eau selon la demande de chaleur, et ayant les caractéristiques suivantes :
   - pour une demande de puissance élevée, à l'aide d'un régulateur continu (régulateur P, régulateur PI, régulateur PID ; c'est-à-dire proportionnel, proportionnel intégral ou proportionnel intégral différentiel) et pour une faible demande de puissance on régule à l'aide d'un régulateur en deux points,
   - entre les deux modes de régulation, que l'on commute automatiquement suivant la puissance de chauffage,
   - on commute du régulateur en continu sur le régulateur en deux points lorsqu'à l'intérieur d'un temps prédéterminé, on dépasse un nombre donné de coupures du brûleur.

2. Procédé selon la revendication 1, caractérisé en ce qu'on commute du régulateur en deux points sur le régulateur continu si la température de consigne ou la température de coupure n'est pas atteinte à l'intérieur d'un temps prédéterminé.

3. Procédé selon l'une des revendications précédentes, caractérisé en ce que pour la régulation en deux points, on limite la puissance de chauffage à une valeur comprise à l'intérieur de la puissance maximale.

4. Procédé selon l'une des revendications précédentes, caractérisé en ce que l'hystérésis de commutation du régulateur en deux points est optimisée à partir d'une valeur de départ, selon l'opération de commutation en fonction de la fréquence de commutation maximale recherchée.

5. Procédé selon l'une des revendications précédentes, caractérisé en ce que la valeur de départ de l'hystérésis de commutation du régulateur en deux points est définie après le passage du régulateur continu au régulateur en deux points comme différence entre la valeur de consigne et la valeur réelle qui se règle après un temps de refroidissement déterminé.

6. Procédé selon l'une des revendications précédentes, caractérisé en ce que la fréquence de commutation maximale est limitée par une limitation de la durée de la période.

7.  Procédé selon la revendication 6, caractérisé en ce qu'elle est définie après coupure de la régulation, comme temps de coupure minimum correspondant à la différence entre la période de la plus petite durée et le temps de branchement obtenu avant la coupure de la régulation.

# FIG. 1

# FIG. 2

# FIG.3

# FIG.4